# EUROPEAN PATENT APPLICATION

(11) **EP 4 191 586 A1**
(43) Date of publication of application: **07.06.2023**
(21) Application number: 21861948.4
(22) Date of filing: 11.08.2021
(51) Int. Cl.: G10L 21/10, G10L 13/08, G10L 15/25, G10L 21/0356, G10L 21/055, H04N 21/43, G06K 9/00, G10L 15/16, G10L 19/16

(54) **METHOD AND SYSTEM FOR APPLYING SYNTHETIC SPEECH TO SPEAKER IMAGE**

(30) Priority: 27.08.2020 KR 20200108678
(71) Applicant: Neosapience, Inc., Seoul 06173 (KR)
(72) Inventor: KIM, Taesu, Suwon-si Gyeonggi-do 16222 (KR); LEE, Younggun, Seoul 03335 (KR); SHIN, Yookyung, Seoul 03116 (KR)
(74) Representative: Wittmer, Maximilian
(86) International application number: PCT/KR2021/010678
(87) International publication number: WO 2022/045651

(57) **Abstract**

The present disclosure relates to a method for applying synthesis voice to a speaker image, in which the method includes receiving an input text, inputting the input text to an artificial neural network text-to-speech synthesis model and outputting voice data for the input text, generating a synthesis voice corresponding to the output voice data, and generating information on a plurality of phonemes included in the output voice data, in which the information on the plurality of phonemes may include timing information for each of the plurality of phonemes included in the output voice data.

## Description

### BACKGROUND

### Technical field

The present disclosure relates to a method and system for applying synthesis voice to a speaker image, and more specifically, to a method and system for providing a synthesis voice for input text and video content generated based on information on each of a plurality of phonemes included in voice data of the input text.

### Background Art

With the development of audio and video content production technologies, any content creator can easily produce audio or video contents. In addition, with the development of voice dubbing technology and virtual video production technology, many video contents featuring virtual persons, animated characters, or the like without a real person are produced.

Meanwhile, for the production of video contents featuring no real person, it is necessary to record the human voices uttering the script when producing video content in order to dub voices to the images or videos featuring the virtual persons or animated characters. In addition, in the related system, images of a mouth of a real person uttering a recorded dubbing voice are captured and recognized in order to make the shape of a mouth of a virtual person or animated character appearing in the video synchronized with the recorded dubbing voice. Due to such a cumbersomeness of the related system, there is an increasing interest in and demand for a technology for automatically producing audio and video contents without recording a separate voice or capturing images of a shape of mouth.

### SUMMARY

### Technical Problem

In order to solve one or more problems (e.g., the problems described above and/or other problems not explicitly described herein), the present disclosure provides a method for producing video content including a synthesis voice for input text and a video in which a speaker's mouth shape corresponds to the synthesis voice, by providing timing information for each of a plurality of phonemes included in the synthesis voice for the input text and voice data for the input text. The present disclosure may be implemented in a variety of ways, including a method, a system, an apparatus, or a non-transitory computer-readable recording medium storing instructions.

### Technical Solution

A method for applying a synthesis voice to a speaker image may be performed by one or more processors and include receiving an input text, inputting the input text to an artificial neural network text-to-speech synthesis model and outputting voice data for the input text, generating a synthesis voice corresponding to the output voice data, and generating information on a plurality of phonemes included in the output voice data, in which the information on the plurality of phonemes may include timing information for each of the plurality of phonemes included in the output voice data.

The method for applying the synthesis voice to the speaker image may further include generating one or more frames including a speaker's mouth shape corresponding to each of the plurality of phonemes based on the timing information for each of the plurality of phonemes, and dubbing the generated synthesis voice to the generated one or more frames to generate video content.

The generating the one or more frames including the speaker's mouth shape corresponding to each of the plurality of phonemes may include generating a facial landmark feature based on the information on the plurality of phonemes, and generating one or more frames including the speaker's mouth shape based on the generated facial landmark feature. In this case, the generated facial landmark feature may include a landmark feature for the speaker's mouth shape.

The generating the synthesis voice corresponding to the output voice data may include inputting the output voice data to a vocoder to generate the synthesis voice, and the generating the information on the plurality of phonemes included in the output voice data may include inputting the output voice data to an artificial neural network phoneme recognition model and outputting timing information for each of the plurality of phonemes.

The inputting the output voice data to the artificial neural network phoneme recognition model and outputting the timing information for each of the plurality of phonemes may include receiving information on a plurality of phoneme sequences of the input text, and inputting the information on the plurality of phoneme sequences and the output voice data to the artificial neural network phoneme recognition model and outputting timing information for each of the plurality of phonemes.

The artificial neural network text-to-speech synthesis model may include an attention module configured to determine a length of the synthesis voice based on a length of the input text, and the generating the information on the plurality of phonemes included in the output voice data may include generating timing information for each of the plurality of phonemes through the attention module.

The artificial neural network text-to-speech synthesis model may include an artificial neural network duration prediction model trained to predict a duration of each of the plurality of phonemes, and the generating the timing information for each of the plurality of phonemes through the attention module may include inputting an embedding for each of the plurality of phonemes to the artificial neural network duration prediction model to predict a duration for each of the plurality of phonemes.

The predicting the duration of each of the plurality of phonemes may include inputting the embedding for each of the plurality of phonemes to the artificial neural network duration prediction model to predict the number of frames to which each of the plurality of phonemes is applied.

The timing information for each of the plurality of phonemes may include at least one of a time information item or a frame information item corresponding to each of the plurality of phonemes.

A non-transitory computer-readable recording medium storing instructions for executing, on a computer, the method for applying the synthesis voice to a speaker image described above is provided.

### Advantageous Effects

According to some examples of the present disclosure, by simply inputting text, user can easily produce video content including the synthesis voice for the input text and the video in which the mouth shape of a virtual person, real person, or character corresponds to the synthesis voice.

According to some examples of the present disclosure, more accurate phoneme information for the voice data of the input text may be provided. Accordingly, the recognition rate of phonemes included in the voice data and the accuracy of the phoneme timing information can be improved compared to the related art.

The artificial neural network text-to-speech synthesis model used in some examples of the present disclosure does not require training data of image (or video)-speech data pairs to provide the video content including synthesis voice and the corresponding video, and can be trained only with the training data of text-speech data pairs. While the training data of the image-speech data pairs may not be suitable for use as the training data when this is mainly extracted from data taken outdoors, the training data of text-speech data pairs in some examples of the present disclosure may be suitable for use in training voice synthesis with little or no noise.

According to some examples of the present disclosure, a speaker image (frame) including the speaker's mouth shape corresponding to a plurality of phonemes included in the input text may be generated using the artificial neural network text-to-speech synthesis model, and video content including the generated speaker image dubbed with synthesis voice may be generated.

### BRIEF DESCRIPTION OF THE DRAWINGS

- FIG. 1: is a diagram illustrating an example of applying a synthesis voice to a speaker image;
- FIG. 2: is a schematic diagram illustrating a configuration in which a plurality of user terminals and an information processing system are communicatively connected to each other to provide a service for generating a synthesis voice for text and applying the synthesis voice to a speaker image;
- FIG. 3: is a blockdiagram of an internal configuration of the userterminal and the information processing system;
- FIG. 4: is a block diagram illustrating an internal configuration of a processor of the information processing system;
- FIG. 5: is a diagram illustrating a network for extracting an embedding vector that can distinguish each of a voice composition, and a plurality of speaker and/or voice style characteristics;
- FIG. 6: is a flowchart illustrating a method for applying synthesis voice to a speaker image;
- FIG. 7: is a diagram illustrating an example of outputting synthesis voice and phoneme timing information for the input text;
- FIG. 8: is a diagram illustrating an example of outputting synthesis voice and phoneme timing information for the input text;
- FIG. 9: is a diagram illustrating an example of outputting synthesis voice and phoneme timing information for the input text;
- FIG. 10: is a diagram showing a structure of an artificial neural network text-to-speech synthesis model; and
- FIG. 11: is a diagram illustrating an example of generating video content based on the synthesis voice and the phoneme timing information.

### DETAILED DESCRIPTION OF THE INVENTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Furthermore, the term "unit" or "module" used herein denotes a software or hardware element, and the "module" performs certain roles. However, the meaning of the "unit" or "module" is not limited to software or hardware. The "unit" or "module" may be configured to be in an addressable storage medium or to execute one or more processors. Accordingly, as an example, the "unit" or "module" may include components such as software components, object-oriented software components, class components, and task components, and at least one of processes, functions, attributes, procedures, subroutines, program code segments of program code, drivers, firmware, micro-codes, circuits, data, database, data structures, tables, arrays, and variables. Furthermore, functions provided in the elements and the "units" or "modules" may be combined as a smaller number of elements and "units" or "modules," or further divided into additional elements and "units" or "modules."

According to an embodiment of the present disclosure, the "unit" or "module" may be implemented as a processor and a memory. The "processor" should be interpreted broadly to encompass a general-purpose processor, a central processing unit (CPU), a microprocessor, a digital signal processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, and so on. The memory is said to be in electronic communication with a processor if the processor can read information from and/or write information to the memory. The memory integrated with the processor is in electronic communication with the processor.

In the present disclosure, "each of a plurality of phonemes included in voice data" may refer to each of all phonemes included in the voice data. Alternatively, it may refer to each of at least some phonemes included in each of a plurality of phonemes included in the voice data.

In the present disclosure, the "information item" may refer to information, and the information may refer to the information item.

In the present disclosure, an "image" may include one or more images. In addition, an image may refer to a video, and a video may refer to an image.

In the present disclosure, a "frame" may refer to one or more images forming video content. In this case, the video content may be configured to include a predetermined number of images per second. Hereinafter, the frame may refer to an image, and the image may refer to the frame.

Hereinafter, examples will be fully described with reference to the accompanying drawings in such a way that those skilled in the art can easily carry out the examples. Further, in order to clearly illustrate the present disclosure, parts not related to the description are omitted in the drawings.

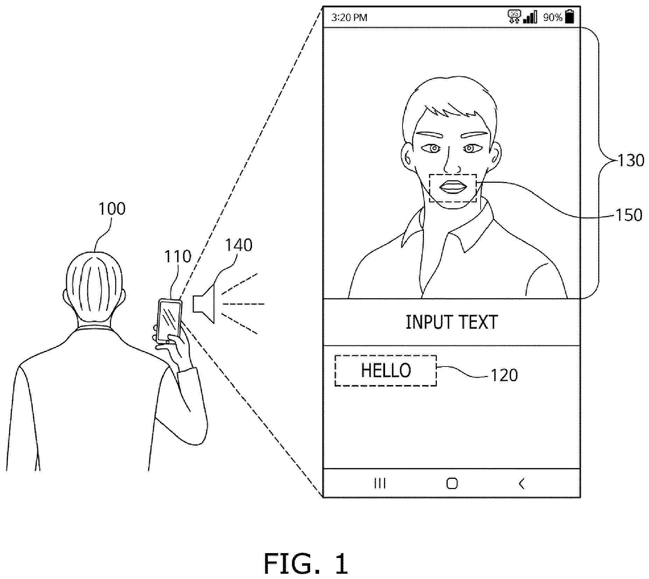

FIG. 1 is a diagram illustrating an example of applying a synthesis voice to a speaker image. A user terminal 110 may receive an input text 120 to provide a user 100 with a video content 130 for the input text 120. In this case, the user terminal 110 may transmit the received input text 120 to an information processing system (not illustrated) to generate a video of a speaker reflecting synthesis voice corresponding to the received input text 120. The input text 120 may be received through an input device (e.g., keyboard, touch screen, etc.) of the user terminal 110, and the received input text 120 may be displayed on a part of the screen of the user terminal 110. For example, as illustrated, the user 100 may directly input text 120 "Hello" into a text input area through a user interface displayed on the user terminal 110.

As another example, the user terminal 110 may receive a file in the form of a document including the input text 120 and upload the file through a user interface. The input text 120 included in the received document format file may be displayed on a part of the screen of the user terminal 110. For example, a file in a document format accessible from the user terminal 110 or through a cloud system may be uploaded through a user interface. The file in the document format may refer to any document format file that can be supported by the user terminal 110 and/or the information processing system, such as a project file or a text file in or from which it is possible to edit or extract the text through a user interface, for example. In the present disclosure, the input text 120 is illustrated below the video content 130, but aspects are not limited thereto, and the input text 120 may be displayed at any position of the user terminal 110.

The user terminal 110 may output voice data for the received input text 120 and generate synthesis voice corresponding to the output voice data. The user terminal 110 may output, through an output device (e.g., a speaker or the like) of the user terminal, the synthesis voice 140 corresponding to the voice data of the input text 120. In this example, the synthesis voice 140 output through the userterminal 110 may include synthesis voice corresponding to the voice data generated or output in response to inputting the input text 120 to an artificial neural network text-to-speech synthesis model. For example, as illustrated, the synthesis voice 140 output through the user terminal may include the synthesis voice 140 corresponding to the voice data generated or output in response to inputting the input text 120 "Hello" to the artificial neural network text-to-speech synthesis model. In this case, the input text 120 may represent or include any data (e.g., an embedding vector, and the like) representing or characterizing the input text.

The user terminal 110 may output the video content 130 for the input text 120. In order for the user terminal 110 to provide the user 100 with the video content 130 for the input text 120, information on a plurality of phonemes included in the synthesis voice 140 for the input text 120 may be generated. In this case, the information on the plurality of phonemes included in the synthesis voice 140 may include timing information for each of the plurality of phonemes included in the synthesis voice 140. For example, in the synthesis voice 140 "Hello," information on section having occurrences of a plurality of phonemes /h/, /a/, /I/, /ou/ included in the synthesis voice 140, order, duration, and the like may be generated. In particular, the information on the duration of the phonemes may be expressed by any information representing time, and may include time information in units of seconds, units of minutes, units of the number of frames, or the like, for example.

Based on the timing information for each of the plurality of phonemes included in the synthesis voice 140, one or more frames including speaker's mouth shapes 150 corresponding to each of the plurality of phonemes may be generated. For example, frames including the speaker's mouth shapes 150 corresponding to each of a plurality of phonemes /h/, /a/, /I/, /ou/ included in the synthesis voice 140 "Hello" may be generated. In this case, a plurality of frames including the speaker's mouth shapes 150 may be generated according to the timing information on the duration of the plurality of phonemes included in the synthesis voice 140. In this case, the speaker may include any real person, virtual person, or the like, and may be expressed as an image of a real person, an avatar of a virtual person, or a character, for example.

The video content 130 may be created by dubbing the synthesis voice 140 for the input text 120 to the one or more generated frames. The one or more frames dubbed with the synthesis voice 140 may be generated based on the timing information for each of a plurality of phonemes included in the synthesis voice 140. Accordingly, the speaker's mouth shape 150 and the synthesis voice 140 included in each frame included in the video content may be synchronized. As illustrated in FIG. 1, when the synthesis voice 140 corresponding to each of the phonemes /h/, /a/, /I/, /ou/ of the input text is output through the speaker of the user terminal 110, a video including the speaker's mouth shape 150 of the character (speaker) uttering each of the phonemes /h/, /a/, /I/, /ou/ may be displayed on the screen of the user terminal.

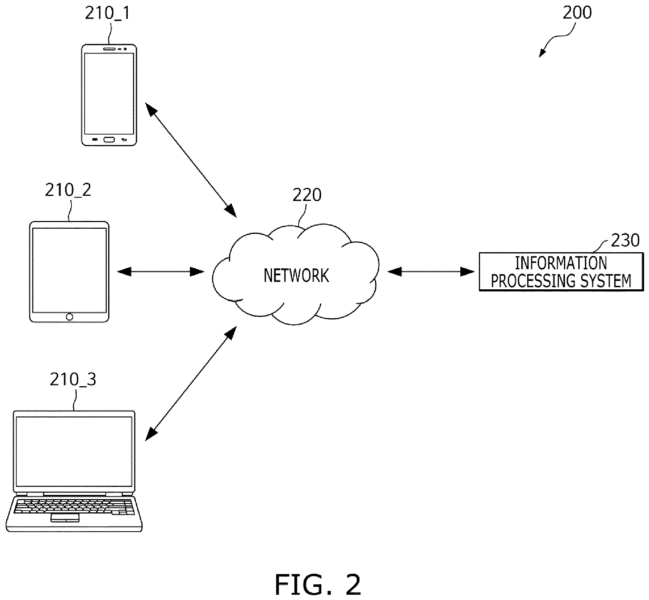

FIG. 2 is a schematic diagram illustrating a configuration 200 in which a plurality of user terminals 210_1, 210_2, and 210_3 and an information processing system 230 are communicatively connected to each other to provide a service for generating a synthesis voice for text and applying the synthesis voice to a speaker image. The plurality of user terminals 210_1, 210_2, and 210_3 may communicate with the information processing system 230 through a network 220. The network 220 may be configured to enable communication between the plurality of user terminals 210_1, 210_2, and 210_3 and the information processing system 230. The network 220 may be configured as a wired network 220 such as Ethernet, a wired home network (Power Line Communication), a telephone line communication device and RS-serial communication, a wireless network 220 such as a mobile communication network, a wireless LAN (WLAN), Wi-Fi, Bluetooth, and ZigBee, or a combination thereof, depending on the installation environment. The method of communication is not limited, and may include a communication method using a communication network (e.g., mobile communication network, wired Internet, wireless Internet, broadcasting network, satellite network, and the like) that may be included in the network 220 as well as short-range wireless communication between the user terminals 210_1, 210_2, and 210_3. For example, the network 220 may include any one or more of networks including a personal area network (PAN), a local area network (LAN), a campus area network (CAN), a metropolitan area network (MAN), a wide area network (WAN), a broadband network (BBN), the Internet, and the like. In addition, the network 220 may include any one or more of network topologies including a bus network, a star network, a ring network, a mesh network, a star-bus network, a tree or hierarchical network, and the like, but not limited thereto.

In FIG. 2, a mobile phone or smart phone 210_1, a tablet computer 210_2, and a laptop or desktop computer 210_3 are illustrated as the examples of the user terminals that execute or operate a user interface providing a voice synthesis service, but aspects are not limited thereto, and the user terminals 210_1, 210_2, and 210_3 may be any computing device that is capable of wired and/or wireless communication and is installed with a synthesis voice generation application or video content generation application to execute a user interface providing a service for applying synthesis voice to a speaker image. Alternatively, these services may be provided or executed through web browsers installed in the user terminals 210_1,210_2, and 210_3. For example, a user terminal 210 may include a smart phone, a mobile phone, a navigation terminal, a desktop computer, a laptop computer, a digital broadcasting terminal, a personal digital assistant (PDA), a portable multimedia player (PMP), a tablet computer, a game console, a wearable device, an internet of things (loT) device, a virtual reality (VR) device, an augmented reality (AR) device, and the like. In addition, while FIG. 2 illustrates that three user terminals 210_1, 210_2, and 210_3 are in communication with the information processing system 230 through the network 220, aspects are not limited thereto, and a different number of user terminals may be configured to be in communication with the information processing system 230 through the network 220.

The user terminals 210_1, 210_2, and 210_3 may receive the input text through the user interface for providing the service for applying the synthesis voice to the speaker image. According to the text input through an input device (e.g., a keyboard) connected to or included in the user terminals 210_1, 210_2, and 210_3, the user terminals 210_1,210_2, and 210_3 may receive the input text. According to another example, input text included in a document format file uploaded through the user interface may be received. The received input text may be provided to the information processing system 230. That is, the information processing system 230 may receive the input text from the userterminals 210_1,210_2, and 210_3 through the network 220.

The user terminals 210_1, 210_2, and 210_3 may receive synthesis voice for the input text from the information processing system 230 through the network 220. The user terminals 210_1, 210_2, and 210_3 may receive the synthesis voice corresponding to the voice data for the input text from the information processing system 230. In this case, the voice data for the input text may be generated or output in response to inputting the input text to an artificial neural network text-to-speech synthesis model in the information processing system 230.

The user terminals 210_1, 210_2, and 210_3 may receive the video content for the input text from the information processing system 230 through the network 220. The user terminals 210_1, 210_2, and 210_3 may receive video content that is created with one or more frames dubbed with the synthesis voice for the input text in the information processing system 230. In this case, the one or more frames may include an image of the speaker's mouth shape corresponding to each of the plurality of phonemes, based on information on the plurality of phonemes included in the voice data generated by the information processing system 230, that is, based on the information on the plurality of phonemes and the timing information on each of the plurality of phonemes.

FIG. 2 shows each of the user terminals 210_1, 210_2, and 210_3 and the information processing system 230 as separate elements, but aspects are not limited thereto, and the information processing system 230 may be configured to be included or implemented in each of the user terminals 210_1, 210_2, and 210_3.

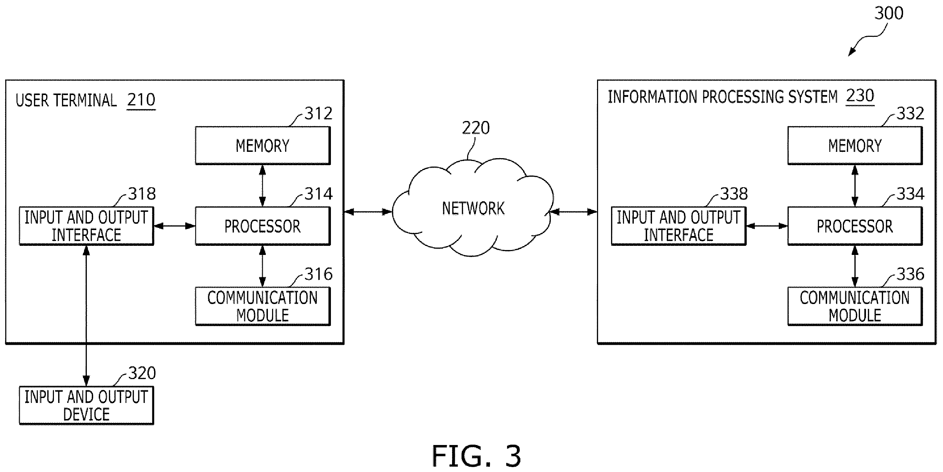

FIG. 3 is a block diagram of an internal configuration of the user terminal 210 and the information processing system 230. The user terminal 210 may refer to any computing device capable of wired and/or wireless communication, and may include the mobile phone or the smart phone 210_1, the tablet computer 210_2, the PC computer 210_3 of FIG. 2, and the like, for example. As illustrated, the user terminal 210 may include a memory 312, a processor 314, a communication module 316, and an input and output interface 318. Likewise, the information processing system 230 may include a memory 332, a processor 334, a communication module 336, and an input and output interface 338. As illustrated in FIG. 3, the user terminal 210 and the information processing system 230 may be configured to communicate information and/or data through the network 220 using respective communication modules 316 and 336. In addition, an input and output device 320 may be configured to input information and/or data to the user terminal 210 or output information and/or data generated from the user terminal 210 through the input and output interface 318.

The memories 312 and 332 may include any non-transitory computer-readable recording medium. The memories 312 and 332 may include a permanent mass storage device such as random access memory (RAM), read only memory (ROM), disk drive, solid state drive (SSD), flash memory, and so on. As another example, a non-destructive mass storage device such as ROM, SSD, flash memory, disk drive, and so on may be included in the user terminal 210 or the information processing system 230 as a separate permanent storage device that is separate from the memory. In addition, an operating system and at least one program code (e.g., a code for providing the service for applying the synthesis voice to the speaker image through the user interface, a code for the artificial neural network text-to-speech synthesis model, and the like) may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include a computer-readable recording medium such as a floppy drive, a disk, a tape, a DVD/CD-ROM drive, a memory card, and so on, for example. As another example, the software components may be loaded into the memories 312 and 332 through the communication modules rather than the computer-readable recording medium. For example, at least one program may be loaded into the memories 312 and 332 based on a computer program (for example, an artificial neural network text-to-speech synthesis model program, a program for applying the synthesis voice to the speaker image, and the like) installed by the files provided by a developer or a file distribution system for distributing installation files of application through the network 220.

The processors 314 and 334 may be configured to process the instructions of the computer program by performing basic arithmetic, logic, and input and output operations. The instructions may be provided to the processors 314 and 334 from the memories 312 and 332 or the communication modules 316 and 336. For example, the processors 314 and 334 may be configured to execute the received instructions according to a program code stored in a recording device such as the memories 312 and 332.

The communication modules 316 and 336 may provide a configuration or function for the user terminal 210 and the information processing system 230 to communicate with each other through the network 220, and may provide a configuration or function for the user terminal 210 and/or the information processing system 230 to communicate with another user terminal or another system (e.g., a separate cloud system, a separate video content sharing support system, or the like). For example, a request (for example, a request to generate a video content) generated by the processor 314 of the user terminal 210 according to the program code stored in the recording device such as the memory 312 may be transmitted to the information processing system 230 through the network 220 under the control of the communication module 316. Conversely, a control signal or a command provided under the control of the processor 334 of the information processing system 230 may be received by the user terminal 210 through the communication module 316 of the user terminal 210 through the communication module 336 and the network 220.

The input and output interface 318 may be a means for interfacing with the input and output device 320. As an example, the input device may include a device such as a keyboard, a microphone, a mouse, and a camera including an image sensor, and the output device may include a device such as a display, a speaker, a haptic feedback device, and the like. As another example, the input and output interface 318 may be a means for interfacing with a device such as a touch screen or the like that integrates a configuration or function for performing inputting and outputting. For example, if the processor 314 of the user terminal 210 processes the instructions of the computer program loaded in the memory 312, a service screen or content, which is configured with the information and/or data provided by the information processing system 230 or other user terminals 210, may be displayed on the display through the input and output interface 318. While FIG. 3 illustrates that the input and output device 320 is not included in the user terminal 210, aspects are not limited thereto, and the input and output device 320 may be configured as one device with the user terminal 210. In addition, the input and output interface 338 of the information processing system 230 may be a means for interface with a device (not illustrated) for inputting or outputting that may be connected to, or included in the information processing system 230. While FIG. 3 illustrates the input and output interfaces 318 and 338 as the components configured separately from the processors 314 and 334, aspects are not limited thereto, and the input and output interfaces 318 and 338 may be configured to be included in the processors 314 and 334.

The user terminal 210 and the information processing system 230 may include more than those components illustrated in FIG. 3. Meanwhile, it would be unnecessary to exactly illustrate most of the related components. The user terminal 210 may be implemented to include at least a part of the input and output device 320 described above. In addition, the user terminal 210 may further include other components such as a transceiver, a Global Positioning System (GPS) module, a camera, various sensors, a database, and the like. For example, if the user terminal 210 is a smartphone, it may include components generally included in the smartphone. For example, in an implementation, various components such as an acceleration sensor, a gyro sensor, a camera module, various physical buttons, buttons using a touch panel, input and output ports, a vibrator for vibration, and so on may be further included in the user terminal 210.

The processor 314 may receive texts, images, and the like, which may be inputted or selected through the input device 320 such as a touch screen, a keyboard, or the like connected to the input and output interface 318, and store the received texts, and/or images in the memory 312 or provide them to the information processing system 230 through the communication module 316 and the network 220. For example, the processor 314 may receive text, a request to generate synthesis voice, a request to generate video content, and the like, which may be input through an input device such as a touch screen or a keyboard. Accordingly, the received request and/or the result of processing the request may be provided to the information processing system 230 through the communication module 316 and the network 220.

The processor 314 may receive input text through the input device 320 and the input and output interface 318. The processor 314 may receive, through the input and output interface 318, the text input through the input device 320. According to another example, the processor 314 may receive, through the input device 320 and the input and output interface 318, an input to upload a document format file including the input text through the user interface. In response to this input, the processor 314 may receive a document format file corresponding to the input from the memory 312. In response to the input, the processor 314 may receive the input text included in the file. The received input text may be provided to the information processing system 230 through the communication module 316. Alternatively, the processor 314 may be configured to provide the uploaded file to the information processing system 230 through the communication module 316, and receive the input text included in the file from the information processing system 230.

The processor 314 may receive, through the input device 320 and the input and output interface 318, an input indicating a request to generate synthesis voice or video content, and provide the request corresponding to the received input to the information processing system 230 through the communication module 316. The processor 314 may receive, through the input device 320, the input for the request to generate synthesis voice for the input text. The processor 314 may receive, through the input device 320, the input for the request to generate the video content for the input text.

The processor 314 may receive, through the communication module 316, the synthesis voice for the input text or the video content for the input text from the information processing system 230. That is, the synthesis voice or the video content generated by the information processing system may be received.

The processor 314 may be configured to output the processed information and/or data through the output device 320 such as a device capable of outputting a display (e.g., a touch screen, a display, and the like) of the user terminal 210 or a device capable of outputting an audio (e.g., a speaker). The processor 314 may display the received input text through the device capable of outputting a display or the like. For example, the processor 314 may output, through the screen of the user terminal 210, the input text "Hello" input through the input device 320. As another example, the processor 314 may output the input text included in the document format file received from the memory 312 through the screen of the user terminal 210. The processor 314 may output the synthesis voice for the input text, or audio content including the synthesis voice through a device capable of outputting an audio. For example, the processor 314 may output, through a speaker, the synthesis voice received from the information processing system 230 or the audio content including the synthesis voice. According to another example, the processor 314 may output the video content for the input text through the device capable of outputting a display and the device capable of outputting an audio. For example, the processor 314 may output the video content received from the information processing system 230 through the screen and the speaker of the user terminal 210.

The processor 334 of the information processing system 230 may be configured to manage, process, and/or store the information and/or data received from a plurality of user terminals including the user terminal 210 and/or a plurality of external systems. The information and/or data processed by the processor 334 may be provided to the user terminal 210 through the communication module 336. For example, the processed information and/or data may be provided to the user terminal 210 in real time or may be provided later in the historical form. For example, the processor 334 may receive, through the communication module 336, the input text from the user terminal 210.

The processor 334 may receive the input text from the user terminal 210, an external system (not illustrated) or the memory 332 of the information processing system 230, and generate voice data and synthesis voice for the received input text. The processor 334 may input the received input text to the artificial neural network text-to-speech synthesis model, output the voice data for the input text, and generate the synthesis voice corresponding to the output voice data. The processor 334 may input the received input text to the artificial neural network text-to-speech synthesis model, output the voice data for the input text, and input the output voice data to a vocoder to generate the synthesis voice corresponding to the voice data. For example, the processor 334 may input the input text "Hello" received from the user terminal 210 to the artificial neural network text-to-speech synthesis model, output the voice data for the input text, and input the output voice data to the vocoder to generate the synthesis voice corresponding to the voice data.

The processor 334 may generate information on a plurality of phonemes included in the generated voice data. In this case, the information on the plurality of phonemes may include at least one of a timing information item for each of the plurality of phonemes included in the voice data, a duration information item for each of the plurality of phonemes, and a time information item or a frame information item corresponding to each of the plurality of phonemes. The processor 334 may input the voice data of the input text to the artificial neural network phoneme recognition model, and output the timing information for each of the plurality of phonemes. The processor 334 may receive information on a plurality of phoneme sequences of the input text, input information on the plurality of phoneme sequences of the input text and voice data for the input text to the artificial neural network phoneme recognition model, and output timing information for each of the plurality of phonemes. In still another example, the processor 334 may generate timing information for each of the plurality of phonemes through an attention module that is configured to determine the length of the synthesis voice based on the length of the input text. In this case, the attention module may be included in the artificial neural network text-to-speech synthesis model used by the processor 334 to generate the voice data for the input text.

The processor 334 may input the timing information to the artificial neural network duration prediction model trained to predict the duration of each of the plurality of phonemes, so as to predict the duration of each of the plurality of phonemes. The artificial neural network model trained to predict the duration of each of the plurality of phonemes may be included in the artificial neural network text-to-speech synthesis model used by the processor 334 to generate the voice data for the input text. For example, the processor 334 may input the embedding for each of the plurality of phonemes to an artificial neural network duration prediction model and predict the number of frames to which each of the plurality of phonemes is applied.

The processor 334 may generate video content for the received input text. To this end, the processor 334 may generate one or more frames including speaker's mouth shapes corresponding to each of the plurality of phonemes, based on the timing information for each of the plurality of phonemes included in the voice data for the input text. The processor 334 may generate facial landmark features based on the information on the plurality of phonemes included in the voice data for the input text, and generate one or more frames including the speaker's mouth shapes based on the generated facial landmark features. In this case, the facial landmark features may include landmark features for the speaker's mouth shape and the like. The processor 334 may dub the synthesis voice for the input text to one or more generated frames to generate video content. The processor 334 may provide the generated video content to the user terminal 210 through the communication module 336.

The synthesis voice generated by the processor 334, the information on the plurality of phonemes included in the voice data, the timing information on each of the plurality of phonemes, the video content, and the like may be stored in the memory 332.

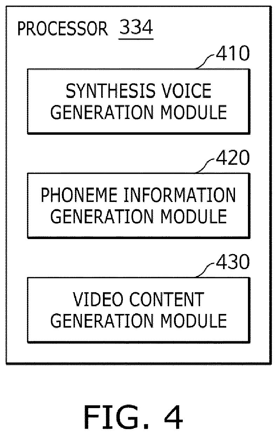

FIG. 4 is a block diagram showing an internal configuration of the processor 334 of the information processing system 230. The processor 334 may include a synthesis voice generation module 410, a phoneme information generation module 420, and a video content generation module 430. Each of the modules operating on the processor 334 may be configured to communicate with each other.

The synthesis voice generation module 410 may generate synthesis voice for the input text. The synthesis voice generation module 410 may generate the synthesis voice for the input text through the artificial neural network text-to-speech synthesis model. The artificial neural network text-to-speech synthesis model may be stored in any storage medium accessible by the synthesis voice generation module 410 through wired and/or wireless communication.

The artificial neural network text-to-speech synthesis model may be trained to output voice data corresponding to input text and input voice style or to generate synthesis voice, using a plurality of reference sentences and a plurality of reference voice styles. In this example, the style may include a speaker's utterance style (e.g., an utterance style of a male, female, elderly speaker or character, or a real person, and the like), a voice style (e.g., speech speed, pitch, prosody, and the like), and an emotion style. The artificial neural network text-to-speech synthesis model trained as described above may receive text and style, output voice data for uttering the text in the received style, or generate synthesis voice.

The synthesis voice generation module 410 may output voice data for the input text in response to inputting the input text to the artificial neural network text-to-speech synthesis model, and generate synthesis voice corresponding to the output voice data. The synthesis voice generation module 410 may input the received input text to the artificial neural network text-to-speech synthesis model, output voice data for the input text, and input the output voice data to the vocoder to generate synthesis voice corresponding to the voice data. For example, the synthesis voice generation module 410 may input the text "Hello" to the artificial neural network text-to-speech synthesis model, and output or generate voice data or synthesis voice of a virtual character "Beom-su" uttering "Hello." That is, the voice data or the synthesis voice reflecting the speaker's utterance style and the voice style of the virtual character "Beom-su" may be output or generated.

The phoneme information generation module 420 may generate information on a plurality of phonemes included in the voice data of the input text. To this end, the phoneme information generation module 420 may receive the voice data for the input text from the synthesis voice generation module 410. In this case, the information on the plurality of phonemes may include at least one of information indicating the plurality of phonemes, timing information for each of the plurality of phonemes included in the voice data, duration information for each of the plurality of phonemes, a time information item or a frame information item corresponding to each of the plurality of phonemes.

The phoneme information generation module 420 may generate information on the plurality of phonemes included in the voice data through the artificial neural network phoneme recognition model. The phoneme information generation module 420 may input the voice data for the input text received from the synthesis voice generation module 410 to the artificial neural network phoneme recognition model, and output or generate timing information for each of the plurality of phonemes. In this case, the artificial neural network phoneme recognition model may be trained to output the information on the plurality of phonemes corresponding to input voice data, using a plurality of reference voice data and a plurality of reference phoneme information. The information on the plurality of phonemes may include timing information on each of the plurality of phonemes. Alternatively, the artificial neural network phoneme recognition model may be configured to output or infer the information on the plurality of phonemes corresponding to the input voice data, using the plurality of reference voice data, the information on the plurality of phoneme sequences, and the plurality of reference phoneme information.

The phoneme information generation module 420 may receive information on a plurality of phoneme sequences of the input text, input the information on the plurality of phoneme sequences of the input text and the voice data of the input text to the artificial neural network phoneme recognition model, and output or generate timing information for each of the plurality of phonemes. In this case, using the information on the plurality of phoneme sequences of the input text, it is possible to further improve the accuracy of timing information for each of the plurality of phonemes.

The timing information for each of the plurality of phonemes may include at least one of a time information item or a frame information item corresponding to each of the plurality of phonemes. The timing information for each of the plurality of phonemes may be generated or stored in a non-stream format such as "json" or "xml." For example, the section (or frames) during which each of the phonemes /h/, /a/, /I/, /ou/ included in the 1.5 second (or 150 frames) of voice data of "Hello" is uttered may be generated or stored in a specific file format (e.g., "json," "xml," and the like), separately from the synthesis voice data. In this case, the section (or frames) during which each phoneme is uttered in the synthesis voice, such as /h/: 0.1 to 0.2 sec (or section of frames 1 to 19), /a/: 0.2 to 0.24 sec (or section of frames 20 to 23), /I/: 0.24 to 0.4 sec (or section of frames 24 to 40), /ou/: 0.4 to 0.5 sec (or section of frames 40 to 50), may be generated and stored separately from the synthesis voice data.

The information on a plurality of phonemes may be generated or stored in a stream format. That is, the phoneme information uttered in each frame of the synthesis voice may be stored together with the synthesis voice data of each frame. For example, if the synthesis voice of "Hello" includes 150 frames, the phoneme /h/ in frames 1 to 19, the phoneme /a/ in frames 20 to 23, and the like may be stored together with the synthesis voice data of each frame. Accordingly, the information on the plurality of phonemes may include the timing information for each of the plurality of phonemes, such as the timing to utter the phoneme /h/ in section from frames 1 to 19, utter the phoneme /a/ in section from frames 20 to 23, and the like. Accordingly, the video content generation module 430 may dub the synthesis voice of each frame to the image frame including the speaker's mouth shape according to the phoneme information of each frame, thereby generating video content in real time.

The video content generation module 430 may generate the video content for the input text. To this end, the video content generation module 430 may receive the synthesis voice for the input text from the synthesis voice generation module 410 and receive the information on the phonemes included in the voice data from the phoneme information generation module 420. The video content generation module 430 may generate one or more frames including the speaker's mouth shape corresponding to each of the plurality of phonemes, based on the information on the plurality of phonemes included in the voice data. The information on the phonemes included in the voice data may include the timing information for each of the plurality of phonemes included in the voice data. For example, the video content generation module 430 may generate an image frame including the speaker's mouth shape uttering the phoneme /h/, an image frame including the speaker's mouth shape uttering the phoneme /a/, an image frame including the speaker's mouth shape uttering the phoneme /I/, and an image frame including the speaker's mouth shape uttering the phoneme /ou/, based on the information on the phonemes /h/, /a/, /I/, /ou/ included in the voice data of "Hello." In this case, a plurality of image frames may be generated, such as 19 image frames including the speaker's mouth shape uttering the phoneme /h/ and 4 image frames including the speaker's mouth shape uttering the phoneme 'I,' according to the timing information for each of the plurality of phonemes.

The video content generation module 430 may dub the synthesis voice for the input text to the one or more generated frames to generate video content. That is, for example, video content including video and audio of the virtual character "Beom-su" uttering the input text "Hello" may be generated. In FIG. 4, the synthesis voice generation module 410 and the phoneme information generation module 420 are illustrated as separate modules, but aspects are not limited thereto. For example, the phoneme information generation module 420 may be implemented to be included in the synthesis voice generation module 410.

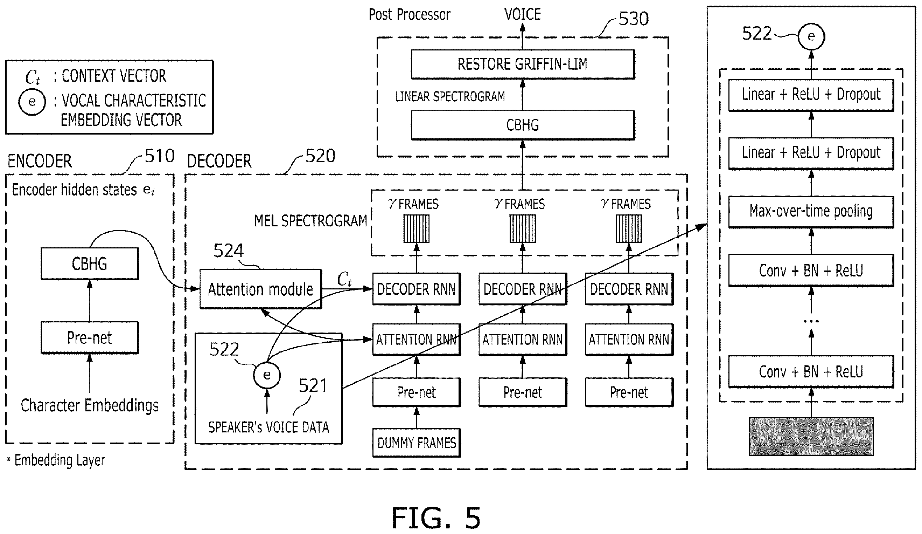

FIG. 5 is a diagram illustrating a network for extracting an embedding vector 522 that can distinguish each of a voice composition, and a plurality of speaker and/or voice style characteristics. The text-to-speech synthesis device may be configured to include an encoder 510, a decoder 520, and a post-processing processor 530. The text-to-speech synthesis device may be configured to be included in an information processing system 300.

The encoder 510 may receive character embeddings for the input text, as illustrated in FIG. 5. According to another example, the input text may include at least one of word, phrase, or sentence used in one or more languages. For example, the encoder 510 may receive one or more sentences as the input text through the user interface. If the input text is received, the encoder 510 may divide the received input text into a syllable unit, a character unit, or a phoneme unit. According to another example, the encoder 510 may receive the input text divided into the syllable unit, the character unit, or the phoneme unit. The encoder 510 may convert the input text and generate the character embeddings.

The encoder 510 may be configured to generate the text as pronunciation information. The encoder 510 may pass the generated character embeddings through a pre-net including a fully-connected layer. In addition, the encoder 510 may provide the output from the pre-net to a CBHG module to output encoder hidden states eᵢ as illustrated in FIG. 5. For example, the CBHG module may include a 1D convolution bank, a max pooling, a highway network, and a bidirectional gated recurrent unit (GRU).

Alternatively, the encoder 510 may be configured such that, if the input text or the divided input text is received, the encoder 510 may generate at least one embedding layer. At least one embedding layer of the encoder 510 may generate the character embeddings based on the input text divided into the syllable unit, character unit, or phoneme unit. For example, the encoder 510 may use a machine learning model (e.g., a probability model, an artificial neural network, or the like) that has been trained in advance to acquire the character embeddings based on the divided input text. Furthermore, the encoder 510 may update the machine learning model while performing machine learning. If the machine learning model is updated, the character embeddings for the divided input text may also be changed. The encoder 510 may pass the character embeddings through a deep neural network (DNN) module composed of the fully-connected layers. The DNN may include a general feedforward layer or a linear layer. The encoder 510 may provide the output of the DNN to a module including at least one of a convolutional neural network (CNN) or a recurrent neural network (RNN), and generate hidden states of the encoder 510. While the CNN may capture local characteristics according to the size of the convolution kernel, the RNN may capture long term dependency. The hidden states of the encoder 510, that is, the pronunciation information for the input text may be provided to the decoder 520 including an attention module 524, and the decoder 520 may be configured to generate the pronunciation information into a voice. The attention module may be configured to determine from which part of the input text a voice is to be generated in the current time-step.

The decoder 520 may receive the hidden states eᵢ of the encoder from the encoder 510. As illustrated in FIG. 5, the decoder 520 may include an attention module, the pre-net composed of the fully-connected layers, and a gated recurrent unit (GRU), and may include an attention recurrent neural network (RNN) and a decoder RNN including a residual GRU. In this example, the attention RNN may output information to be used in the attention module. In addition, the decoder RNN may receive position information of the input text from the attention module. That is, the position information may include information regarding which position in the input text is being converted into voice by the decoder 520. The decoder RNN may receive information from the attention RNN. The information received from the attention RNN may include information regarding which voices the decoder 520 has generated up to the previous time-step. The decoder RNN may generate the next output voice following the voices that have been generated so far. For example, the output voice may have a mel spectrogram form, and the output voice may include r frames.

The pre-net included in the decoder 520 may be replaced with the DNN composed of the fully-connected layers. In this example, the DNN may include at least one of a general feedforward layer or a linear layer.

In addition, like the encoder 510, the decoder 520 may use a database existing as a pair of information related to the input text, speaker and/or voice style characteristics, and voice signal corresponding to the input text, in order to generate or update the artificial neural network text-to-speech synthesis model. The decoder 520 may be trained with the inputs to the artificial neural network and the ground truth, in which the inputs may include information related to the input text, speaker, and/or voice style characteristics respectively, and the ground truth may include voice signals corresponding to the input text. The decoder 520 may apply the information related to the input text, speaker and/or voice style characteristics to the updated single artificial neural network text-to-speech synthesis model, and output a voice corresponding to the speaker and/or voice style characteristics.

In addition, the output of the decoder 520 may be provided to the post-processing processor 530. The CBHG of the post-processing processor 530 may be configured to convert the mel-scale spectrogram of the decoder 520 into a linear-scale spectrogram. For example, the output signal of the CBHG of the post-processing processor 530 may include a magnitude spectrogram. The phase of the output signal of the CBHG of the post-processing processor 530 may be restored through the Griffin-Lim algorithm and subjected to the Inverse Short-Time Fourier Transform. The post-processing processor 530 may output a voice signal in a time domain.

Alternatively, the output of the decoder 520 may be provided to the vocoder (not illustrated). For the purpose of text-to-speech synthesis, the operations of the DNN, the attention RNN, and the decoder RNN may be repeatedly performed. For example, the r frames acquired in the initial time-step may become the inputs of the subsequent time-step. Also, the r frames output in the subsequent time-step may become the inputs of the subsequent time-step that follows. Through the process described above, voices may be generated for all units of the text.

The text-to-speech synthesis device may acquire the voice of the mel spectrogram for the whole text by concatenating the mel spectrograms for the respective time-steps in chronological order. The vocoder may predict the phase of the spectrogram through the Griffin-Lim algorithm. The vocoder may output the voice signal in time domain using the Inverse Short-Time Fourier Transform.

The vocoder may generate the voice signal from the mel spectrogram based on a machine learning model. The machine learning model may include a model trained with the correlation between the mel spectrogram and the voice signal. For example, the vocoder may be implemented using the artificial neural network model such as WaveNet, WaveRNN, and WaveGlow, which has the mel spectrogram or linear prediction coefficient (LPC), line spectral pair (LSP), line spectral frequency (LSF), or pitch period as the inputs, and has the voice signals as the outputs.

The artificial neural network-based text-to-speech synthesis device may be trained using a large database existing as the text-speech signal pair. A loss function may be defined by comparing the output to the text that is entered as the input, with the corresponding target voice signal. For example, the text-to-speech synthesis device may learn the loss function through the error back propagation algorithm to finally obtain a single artificial neural network text-to-speech synthesis model that outputs a desired voice when any text is input.

The decoder 520 may receive the hidden states eᵢ of the encoder from the encoder 510. The decoder 520 of FIG. 5 may receive voice data 521 corresponding to a specific speaker and/or a specific voice style characteristic. In this case, the voice data 521 may include data representing a voice input from a speaker within a predetermined time period (a short time period, e.g., several seconds, tens of seconds, or tens of minutes). For example, the voice data 521 of a speaker may include speech spectrogram data (e.g., log-mel-spectrogram). The decoder 520 may acquire the embedding vector 522 representing the speaker and/or voice style characteristics based on the voice data of the speaker. The decoder 520 of FIG. 5 may receive a single-hot speaker ID vector or speaker vector for each speaker, and based on this, may acquire the embedding vector 522 representing the speaker and/or voice style characteristics. The acquired embedding vector may be stored in advance, and if a specific speaker and/or voice style characteristic is requested through the user interface, a synthesis voice may be generated using the embedding vector corresponding to the requested information among the previously stored embedding vectors. The decoder 520 may provide the acquired embedding vector 522 to the attention RNN and the decoder RNN.

The text-to-speech synthesis device illustrated in FIG. 5 provides a plurality of previously stored embedding vectors corresponding to a plurality of speakers and/or a plurality of voice style characteristics. If the user selects a specific role or specific voice style characteristic through the user interface, a synthesis voice may be generated using the corresponding embedding vector. Alternatively, in order to generate a new speaker vector, the text-to-speech synthesis device may provide a TTS system that can immediately generate a voice of a new speaker, that is, that can adaptively generate the voice of the new speaker without further training the TTS model or manually searching for the speaker embedding vectors. That is, the text-to-speech synthesis device may generate voices that are adaptively changed for a plurality of speakers. In FIG. 5, it may be configured such that, when synthesizing a voice for the input text, the embedding vector 522 extracted from the specific speaker's voice data 521 may be input to the decoder RNN and the attention RNN. A synthesis voice may be generated, which reflects at least one characteristic from among a vocal characteristic, a prosody characteristic, an emotion characteristic, or a tone and pitch characteristic included in the embedding vector 522 of the specific speaker.

The network illustrated in FIG. 5 may include a convolutional network and max over time pooling, and may receive a log-mel-spectrogram and extract a fixed-dimensional speaker embedding vector as a voice sample or a voice signal. In this example, the voice sample or the voice signal is not necessarily the voice data corresponding to the input text, and any selected voice signal may be used.

In such a network, any spectrogram may be inserted into this network since there is no restriction on the use of the spectrograms. In addition, through this, the embedding vector 522 representing a new speaker and/or new voice style characteristic may be generated through the immediate adaptation of the network. The input spectrogram may have various lengths, and for example, a fixed dimensional vector having a length of 1 with respect to the time axis may be input to the max-over-time pooling layer positioned at the end of the convolutional layer.

FIG. 5 shows a network including the convolutional network and the max overtime pooling, but a network including various layers can be established to extract the speaker and/or voice style characteristics. For example, a network may be implemented to extract characteristics using the recurrent neural network (RNN), if there is a change in the voice characteristic pattern over time, such as an intonation, among the speaker and/or voice style characteristics.

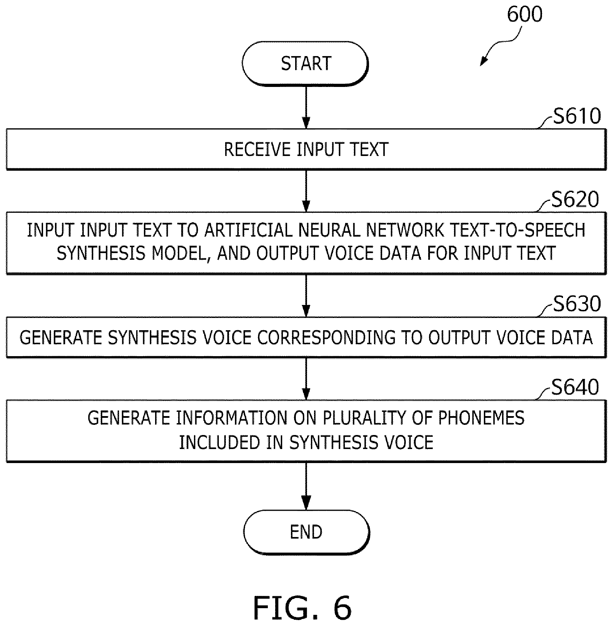

FIG. 6 is a flowchart illustrating a method 600 for applying a synthesis voice to a speaker image. The method 600 for applying the synthesis voice to the speaker image may be performed by the user terminal and/or the information processing system. As illustrated, the method 600 for applying the synthesis voice to the speaker image may begin at S610 by receiving the input text. The input text may be received through the input device (e.g., keyboard, touch pad, and the like) of the user terminal. The receiving the input text at S610 may include receiving the input voice and converting the received input voice into input text through a speech-to-text model.

At S620, the input text may be input to the artificial neural network text-to-speech synthesis model, and voice data for the input text may be output. For example, the voice data for the input text reflecting a specific speaker's utterance style, specific voice style, emotional style, and the like may be output. In this case, the speaker's voice data may include voice spectrogram data (e.g., log-mel-spectrogram).

At S630, a synthesis voice corresponding to the output voice data may be generated. The output voice data may be input to the vocoder and the synthesis voice may be generated.

At S640, information on a plurality of phonemes included in the output voice data may be generated. The information on the plurality of phonemes may include timing information for each of the plurality of phonemes included in the voice data. In this case, the timing information for each of the plurality of phonemes may include at least one of duration information corresponding to each of the plurality of phonemes, and a time information item or a frame information item corresponding to each of the plurality of phonemes. The output voice data may be input to an artificial neural network phoneme recognition model, and timing information for each of a plurality of phonemes may be output.

One or more frames including the speaker's mouth shape corresponding to each of the plurality of phonemes may be generated based on the timing information for each of the plurality of phonemes. The generated synthesis voice may be dubbed to one or more generated frames and the video content may be generated. That is, video content including a video of a specific speaker uttering the input text and a synthesis voice may be generated.

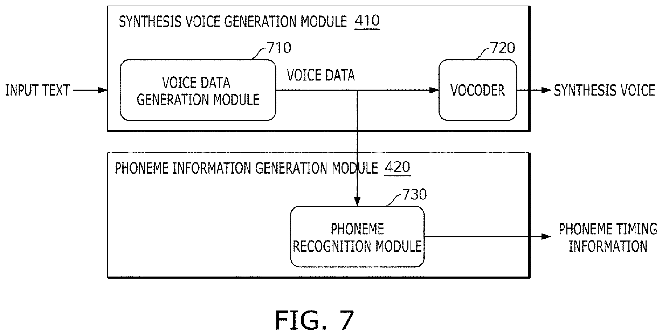

FIG. 7 is a diagram illustrating an example of outputting synthesis voice and phoneme timing information for the input text. As illustrated in FIG. 6, the synthesis voice generation module 410 may include a voice data generation module 710 and a vocoder 720. In addition, the phoneme information generation module 420 may include a phoneme recognition module 730. The voice data generation module 710 may be configured to include the encoder 510 and the decoder 520 described above. In addition, the vocoder 720 may correspond to the vocoder described above with reference to FIG. 5.

The voice data generation module 710 may generate the voice data using the artificial neural network text-synthesis model. In this case, the artificial neural network text-synthesis model may be stored in any storage device accessible by the voice data generation module 710. Accordingly, the voice data generation module 710 may receive the input text, input the input text to the artificial neural network text-synthesis model, and output the voice data for the input text. The output voice data may be input to the vocoder 720 and the synthesis voice may be generated. That is, the vocoder 720 may receive the voice data for the input text from the voice data generation module 710 and generate the synthesis voice corresponding to the received voice data. The vocoder 720 may arrange a plurality of frames in time order and convert the output voice data expressed as a mel spectrogram into the voice in the time domain.

The vocoder 720 may generate a voice signal from the mel spectrogram based on the machine learning model. The machine learning model may include a model trained with the correlation between the mel spectrogram and the voice signal. For example, the vocoder may be implemented using the artificial neural network model such as WaveNet, WaveRNN, and WaveGlow, which has the mel spectrogram or linear prediction coefficient (LPC), line spectral pair (LSP), line spectral frequency (LSF), or pitch period as the inputs, and has the voice signals as the outputs.

The phoneme recognition module 730 may receive voice data output from the voice data generation module 710 and generate information on the plurality of phonemes included in the output voice data. The phoneme recognition module 730 may include an artificial neural network phoneme recognition model. Accordingly, the phoneme recognition module 730 may input the voice data output from the voice data generation module 710 to the artificial neural network phoneme recognition model and output the timing information for each of the plurality of phonemes included in the voice data.

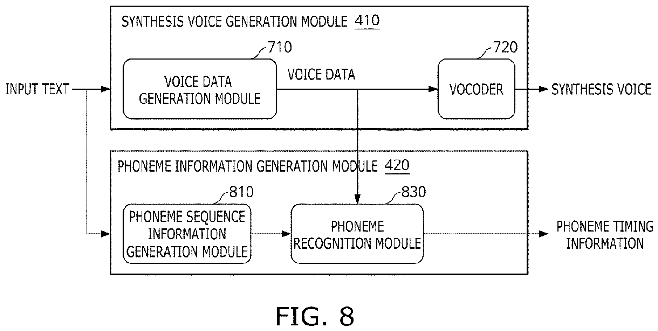

FIG. 8 is a diagram illustrating an example of outputting synthesis voice and phoneme timing information for the input text. As illustrated in FIG. 8, the synthesis voice generation module 410 may include a voice data generation module 710 and a vocoder 720. In addition, the phoneme information generation module 420 may include a phoneme sequence information generation module 810 and a phoneme recognition module 830. The voice data generation module 710 and the vocoder 720 have been described above in detail with reference to FIG. 7, and redundant descriptions thereof will be omitted below.

The phoneme sequence information generation module 810 may receive the input text received by the voice data generation module 710 and generate information on a plurality of phoneme sequences of the input text. The phoneme sequence information generation module 810 may provide the phoneme recognition module 830 with the generated information on the plurality of phoneme sequences of the input text. In this case, the information on the plurality of phoneme sequences may include information on the order of the plurality of phonemes included in the input text.

The phoneme recognition module 830 may receive the voice data output from the voice data generation module 710 of the synthesis voice generation module 410 and the information on the plurality of phoneme sequences of the input text from the phoneme sequence information generation module 810, and generate information on the plurality of phonemes included in the output voice data. The phoneme recognition module 830 may input the information on the plurality of phoneme sequences and output the voice data to the artificial neural network phoneme recognition model and output the timing information for each of the plurality of phonemes. In this case, more accurate timing information for each of a plurality of phonemes may be generated or output.

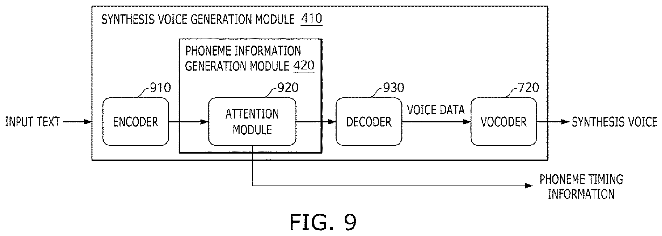

FIG. 9 is a diagram illustrating an example of outputting synthesis voice and phoneme timing information for the input text. As illustrated in FIG. 9, the synthesis voice generation module 410 may include an encoder 910, the phoneme information generation module 420, a decoder 930 and the vocoder 720. In this case, the phoneme information generation module 420 may include an attention module 920. The vocoder 720 has been described above in detail with reference to FIG. 7, and redundant descriptions thereof will be omitted below. Each of the encoder 910, the attention module 920, and the decoder 930 may correspond to each of the encoder 510, the attention module 524, and the decoder 520 of FIG. 5 described above. In FIG. 9, the attention module 920 and the decoder 930 are illustrated as separate components, but aspects are not limited thereto, and for example, the attention module 920 may be included in the encoder 910 and/or the decoder 930.

The encoder 910 may receive the input text, as illustrated in FIG. 9. If the input text is received, the encoder 910 may divide the received input text into predetermined units (e.g., syllable units, character units, and/or phoneme units, and the like). The encoder 910 may receive input text divided into predetermined units (e.g., syllable units, character units, phoneme units, and the like). The encoder 910 may convert the divided input text and generate an embedding vector. For example, the encoder 910 may use a machine learning model (e.g., a probability model, an artificial neural network, or the like) that has been trained in advance to acquire the embeddings based on the divided input text. The encoder 910 may receive embeddings for the input text.

The encoder 910 may be configured to generate the input text as pronunciation information based on the embeddings of the input text. The pronunciation information for the input text generated by the encoder 910 may be provided to the attention module 920 and the decoder 930, and the decoder 930 may be configured to generate the pronunciation information into voice data.

The attention module 920 may be configured to determine the length of the synthesis voice based on the length of the input text. The attention module 920 included in the artificial neural network text-to-speech synthesis model may generate or output the timing information for each of the plurality of phonemes included in the voice data.

The decoder 930 may be configured to receive pronunciation information for the input text and generate the received pronunciation information into a synthesis voice. In addition, the decoder 930 may be configured to receive information related to style characteristics such as speaker or voice style characteristic associated with the voice, and generate a synthesis voice reflecting the style characteristics. The decoder 930 may be configured to input the information related to the input text, speaker and/or voice style characteristics into the artificial neural network text-to-speech synthesis model so that a synthesis voice corresponding to the input text reflecting the speaker and/or voice style characteristics is generated.

Like the encoder 910, the decoder 930 may use a database existing as a pair of information related to the input text, speaker and/or voice style characteristics, and voice signal corresponding to the input text, in order to generate or update the artificial neural network text-to-speech synthesis model. This database may be stored in any storage device accessible by the decoder 930. Using the input text, information related to speaker and/or voice style characteristics, and the voice signal corresponding to the input text, the decoder 930 may train the artificial neural network text-to-speech synthesis model. In this case, each of the speaker and/or voice style characteristics may be provided as a plurality of corresponding embedding vectors.

If a user selects a particular speaker, a particular role, and/or a specific voice style characteristic via the user interface, using the corresponding embedding vectors, it is possible to generate a synthesis voice reflecting the specific selected speaker, vocalization features, prosody features, emotional features, timbre and/or pitch features included in the specific speaker (role) and/or specific voice style characteristics.

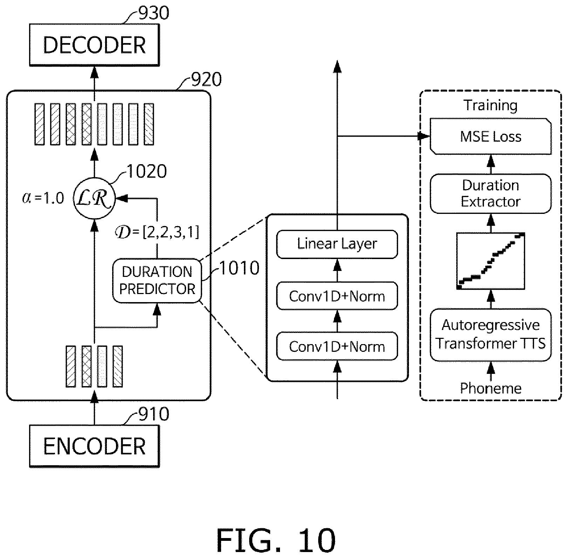

FIG. 10 is a diagram showing a structure of the artificial neural network text-to-speech synthesis model. The artificial neural network text-to-speech synthesis model may include the encoder 910, the attention module 920, and the decoder 930. The encoder 910 and the decoder 930 have been described above in detail with reference to FIG. 9, and redundant descriptions thereof will be omitted below.

The artificial neural network text-to-speech synthesis model may include the attention module 920 configured to determine a length of synthesis voice based on a length of the input text, and generate, through the attention module 920, the timing information for each of the plurality of phonemes included in voice data.

The timing information for each of the plurality of phonemes included in the voice data may include a duration for each of the plurality of phonemes, and the attention module 920 may include a duration predictor 1010 that predicts a duration for each of a plurality of phonemes, as illustrated. In this case, the duration predictor 1010 may include an artificial neural network duration prediction model trained to predict durations of each of the plurality of phonemes included in the voice data. That is, the artificial neural network text-to-speech synthesis model may include an artificial neural network duration prediction model.

As illustrated, the attention module 920 may receive phoneme embeddings from the encoder 910. For example, the artificial neural network duration prediction model included in the duration predictor 1010 may include a 1D convolution (Conv1D) and normalization (Norm) layer and a linear layer, as illustrated. The artificial neural network duration prediction model may be trained such that the plurality of phonemes included in voice data are input into a previously trained autoregressive transformer TTS (TTS) model and durations of the phonemes are extracted therefrom, in which MSE loss (Mean Square Error Loss) between the duration of each extracted phoneme and the duration of each phoneme output from the duration predictor 1010 is minimized.

The duration predictor 1010 may input the embedding of each of the plurality of phonemes included in the voice data to the artificial neural network duration prediction model to predict the duration of each of the plurality of phonemes. The duration predictor 1010 may input the embedding for each of a plurality of phonemes included in the voice data to the artificial neural network duration prediction model to predict the number of frames to which each of the plurality of phonemes is applied. That is, the duration predictor 1010 may predict, of all frames of the voice data for the input text, the number of frames in which each of the plurality of phonemes is uttered.

The attention module 920 may provide the decoder 930 with the information on each of the plurality of phonemes generated by copying each of the plurality of phonemes included in the voice data by the number of frames predicted by the duration predictor 1010. In addition, the information on each of these phonemes may be provided to the video content generation module 430 to generate frames corresponding to each phoneme. As illustrated in FIG. 10, a length regulator (LR) 1020 may generate a plurality of phonemes as many as the predicted number of corresponding frames, using the number of frames {2, 2, 3, 1} predicted by the duration predictor 1010. In the drawing, α may refer to a hyperparameter capable of adjusting the speed of the voice to be synthesized, and the LR 1020 may adjust the speed of the voice by multiplying the result value derived from the duration predictor 1010 by α. For example, as illustrated, if α is 1.0, the attention module 920 may generate a plurality of phonemes at a rate corresponding to the predicted number of frames {2, 2, 3, 1}, unchanged from the number of frames {2, 2, 3, 1} predicted by the duration predictor 1010. As another example, if α is 1.3, the attention module 920 may generate a plurality of phonemes at a rate corresponding to the calculated number of frames based on the number of frames {3, 3, 4, 1} calculated by rounding off the number of frames {2.6, 2.6, 3.9, 1.3} calculated by multiplying the number of frames {2, 2, 3, 1} by 1.3 in the LR 1020. Under this configuration, voice may be generated at a slower rate than when α is 1.0. As another example, if α is 0.5, the attention module 920 generates a plurality of phonemes at a rate corresponding to the calculated number of frames based on the number of frames {1, 1, 2, 1} calculated by rounding off the number of frames {1, 1, 1.5, 0.5} calculated by multiplying the number of frames {2, 2, 3, 1} by 0.5 in the LR 1020. Under this configuration, voice may be generated at a higher rate than when α is 1.0. In this case, each of the plurality of generated phonemes may include any information representing or characterizing the corresponding phoneme. For example, if the number of frames in which the phoneme /h/ of the plurality of phonemes included in the voice data is uttered is predicted to be 10, the attention module 920 may copy the phoneme /h/ by the number of frames, that is, by 10, and provide the result to the decoder 930 and the video content generation module 430.

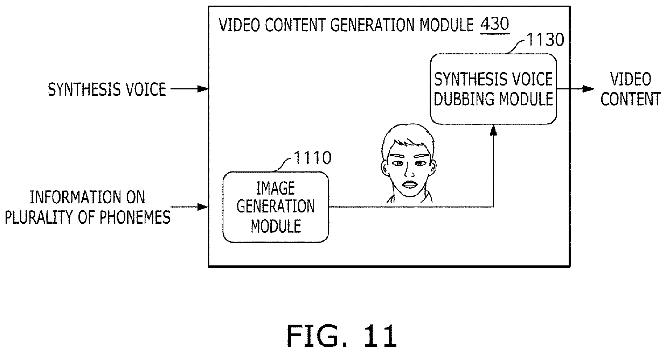

FIG. 11 is a diagram illustrating an example of generating video content based on the synthesis voice and the phoneme timing information. As illustrated in FIG. 11, the video content generation module 430 may include an image generation module 1110 and a synthesis voice dubbing module 1130. As illustrated, the video content generation module 430 may receive information on a synthesis voice and a plurality of phonemes, and output video content based on the received information. In this case, the information on each of the plurality of phonemes may include timing information on each of the plurality of phonemes.

The image generation module 1110 may receive the information on the plurality of phonemes and generate a speaker image including the speaker's mouth shape. The image generation module 1110 may generate one or more frames including the speaker's mouth shape corresponding to each of the plurality of phonemes based on the timing information for each of the plurality of phonemes. For example, the image generation module 1110 may generate frames or image including a mouth shape corresponding to the phoneme category using the information on the plurality of phonemes.

The image generation module 1110 may be configured to include a facial landmark generation module (not illustrated) and a frame generation module (not illustrated). In this case, the facial landmark generation module may receive the information on each of the plurality of phonemes and generate facial landmark features corresponding to each of the plurality of phonemes. The facial landmark features corresponding to each of the plurality of phonemes may be provided to the frame generation module, and the frame generation module may generate speaker image frames corresponding to each of the plurality of phonemes based on the facial landmark features corresponding to each of the plurality of phonemes and the timing information for each of the plurality of phonemes.

In this case, the facial landmark features may include landmark features for the speaker's mouth shape. For example, the facial landmark generation module may receive the phoneme /h/ and generate facial landmark features including a landmark feature for the shape of mouth uttering the phoneme /h/. In addition, the speaker image frames may include one or more frames including the shape of the speaker's mouth uttering each of the plurality of phonemes. For example, the frame generation module may reflect the received facial landmark features and generate one or more frames including the shape of a mouth of a character "Beom-su" uttering the phoneme /h/. The character may be determined in advance or may be determined according to a user input. One or more generated frames may be provided to the synthesis voice dubbing module 1130.

The synthesis voice dubbing module 1130 may receive the synthesis voice generated by the synthesis voice generation module 410 and receive one or more frames generated by the image generation module 1110. The synthesis voice dubbing module 1130 may dub the synthesis voice to one or more received frames to generate video content. For example, the synthesis voice dubbing module 1130 may generate, from the synthesis voice generation module 410, a synthesis voice corresponding to "Hello." In addition, the synthesis voice dubbing module 1130 may receive, from the image generation module 1110, a plurality of frames in which the character "Beom-su" utters each of a plurality of phonemes included in "Hello." Accordingly, the synthesis voice dubbing module 1130 may dub the synthesis voice in which the speaker "Beom-su" utters "Hello" to the plurality of received frames, and generate video content in which the character "Beom-su" utters "Hello."

The method for applying the synthesis voice to the speaker image may be provided as a computer program stored in a computer readable recording medium to be executed by a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, and so on. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies according to design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, and the like. The instructions may be executable by one or more processors, and may cause the processor(s) to perform certain aspects of the functions described in the present disclosure.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or devices, and storage may be similarly influenced across a plurality of devices. Such devices may include PCs, network servers, and portable devices.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method for applying synthesis voice to a speaker image, the method being performed by one or more processors and comprising:
receiving an input text;
inputting the input text to an artificial neural network text-to-speech synthesis model and
outputting voice data for the input text;
generating a synthesis voice corresponding to the output voice data; and
generating information on a plurality of phonemes included in the output voice data,
wherein the information on the plurality of phonemes includes timing information for each of the plurality of phonemes included in the output voice data,

2. The method according to claim 1, further comprising:
generating one or more frames including a speaker's mouth shape corresponding to each of the plurality of phonemes based on the timing information for each of the plurality of phonemes; and
dubbing the generated synthesis voice to the generated one or more frames to generate video content,

3. The method according to claim 2, wherein the generating the one or more frames including the speaker's mouth shape corresponding to each of the plurality of phonemes includes:
generating a facial landmark feature based on the information on the plurality of phonemes, wherein the generated facial landmark feature includes a landmark feature for the speaker's mouth shape; and
generating one or more frames including the speaker's mouth shape based on the generated facial landmark feature.

4. The method according to claim 1, wherein the generating the synthesis voice corresponding to the output voice data includes inputting the output voice data to a vocoder to generate the synthesis voice, and
the generating the information on the plurality of phonemes included in the output voice data includes inputting the output voice data to an artificial neural network phoneme recognition model and outputting timing information for each of the plurality of phonemes.

5. The method according to claim 4, wherein the inputting the output voice data to the artificial neural network phoneme recognition model and outputting the timing information for each of the plurality of phonemes includes:
receiving information on a plurality of phoneme sequences of the input text; and
inputting the information on the plurality of phoneme sequences and the output voice data to the artificial neural network phoneme recognition model, and outputting timing information for each of the plurality of phonemes.

6. The method according to claim 1, wherein the artificial neural network text-to-speech synthesis model includes an attention module configured to determine a length of the synthesis voice based on a length of the input text, and
the generating the information on the plurality of phonemes included in the output voice data includes generating timing information for each of the plurality of phonemes through the attention module.

7. The method according to claim 6, wherein the artificial neural network text-to-speech synthesis model includes an artificial neural network duration prediction model trained to predict a duration of each of the plurality of phonemes, and
the generating the timing information for each of the plurality of phonemes through the attention module includes inputting an embedding for each of the plurality of phonemes to the artificial neural network duration prediction model to predict a duration for each of the plurality of phonemes.

8. The method according to claim 7, wherein the predicting the duration of each of the plurality of phonemes includes inputting the embedding for each of the plurality of phonemes to the artificial neural network duration prediction model to predict the number of frames to which each of the plurality of phonemes is applied.

9. The method according to claim 1, wherein the timing information for each of the plurality of phonemes includes at least one of a time information item or a frame information item corresponding to each of the plurality of phonemes.

10. A non-transitory computer-readable recording medium storing instructions that, when executed by one or more processors, cause performance of the method according to claim 1.
